# EUROPÄISCHE PATENTSCHRIFT

(11) **EP 0 947 405 B1**
(45) Veröffentlichungstag und Bekanntmachung des Hinweises auf die Patenterteilung: **02.02.2005**
(21) Anmeldenummer: 99106490.8
(22) Anmeldetag: 30.03.1999
(51) Int. Cl.: B60S 3/04

(54) **Portalwaschanlage für Fahrzeuge**
Washing gantry for vehicles
Portique de lavage pour véhicules

(30) Priorität: 03.04.1998 DE 29806120 U
(43) Veröffentlichungstag der Anmeldung: 06.10.1999
(73) Patentinhaber: WashTec Holding GmbH, 86153 Augsburg (DE)
(72) Erfinder: Bein, Joachim, 63808 Haibach (DE)
(74) Vertreter: Rapp, Bertram, Dr.

(56) Entgegenhaltungen:
- EP-A- 0 700 814
- EP-A- 0 808 754
- DE-A- 4 417 864
- DE-A- 19 527 828

## Beschreibung

Die Erfindung betrifft eine Portalwaschanlage für Fahrzeuge mit den Merkmalen im Oberbegriff des Hauptanspruchs.

Derartige Portalwaschanlagen mit zwei eigenständig beweglichen Portalen sind z.B. aus der EP-A 0 309 004 oder der DE-A 195 27 828 bekannt. Die beiden Portale haben gekoppelte Maschinensteuerungen oder eine gemeinsame Maschinensteuerung und besitzen jeweils eine Wegerfassungseinrichtung. An einem Portal ist eine Radwascheinrichtung angeordnet. Zur Steuerung dieser Radwascheinrichtung bzw. des zugehörigen Portals ist überlicherweise in der Praxis eine Tasteinrichtung vorhanden, die am gleichen Portal wie die Radwascheinrichtung angeordnet ist.

Es ist Aufgabe der vorliegenden Erfindung, eine Portalwaschanlage mit einer anderen Anordnung von Radwascheinrichtung und Tasteinrichtung aufzuzeigen.

Die Erfindung löst diese Aufgabe mit den Merkmalen im Hauptanspruch.
Bei der erfindungsgemäßen Portalwaschanlage sind die Tasteinrichtung und die Radwascheinrichtung an unterschiedlichen Portalen angeordnet. Dies bringt verschiedene Vorteile mit sich.

Insbesondere kann die Tasteinrichtung am vorausfahrenden Portal angeordnet sein, während die Radwascheinrichtung in bekannter und üblicher Weise am nachfolgenden Portal positioniert ist. Diese Gestaltung erlaubt es, am vorausfahrenden Portal zusätzlich eine Radbehandlungseinrichtung anzuordnen, die z.B. aus einem Sprühkopf, einem Schaumauftragekopf oder dergleichen bestehen kann. Mit der Tasteinrichtung können zu diesem und zu anderen Zwecken beide Portale in ihren radabhängigen Prozessen und Bewegungen gesteuert werden.

Darüberhinaus ergibt sich der Vorteil, daß bei einer weitergehenden Ausnutzung der gemeinsamen Tasteinrichtung der Bauaufwand minimiert werden kann. Zusätzliche Tasteinrichtungen sind entbehrlich. Außerdem kann durch die Portaltrennung von Tasteinrichtung und Radwascheinrichtung ein größerer Schalt- und Steuerungsvorlauf erreicht werden.

In den Unteransprüchen sind weitere vorteilhafte Ausgestaltungen der Erfindung angegeben.

Die Erfindung ist in den Zeichnungen beispielsweise und schematisch dargestellt. Im einzelnen zeigen:
- Figur 1:: eine Portalwascheinrichtung mit zwei Portalen, einer Radwascheinrichtung und einer Tasteinrichtung in Seitenansicht und
- Figur 2:: die Portalwaschanlage von Figur 1 in Stirnansicht gemäß Pfeil II.

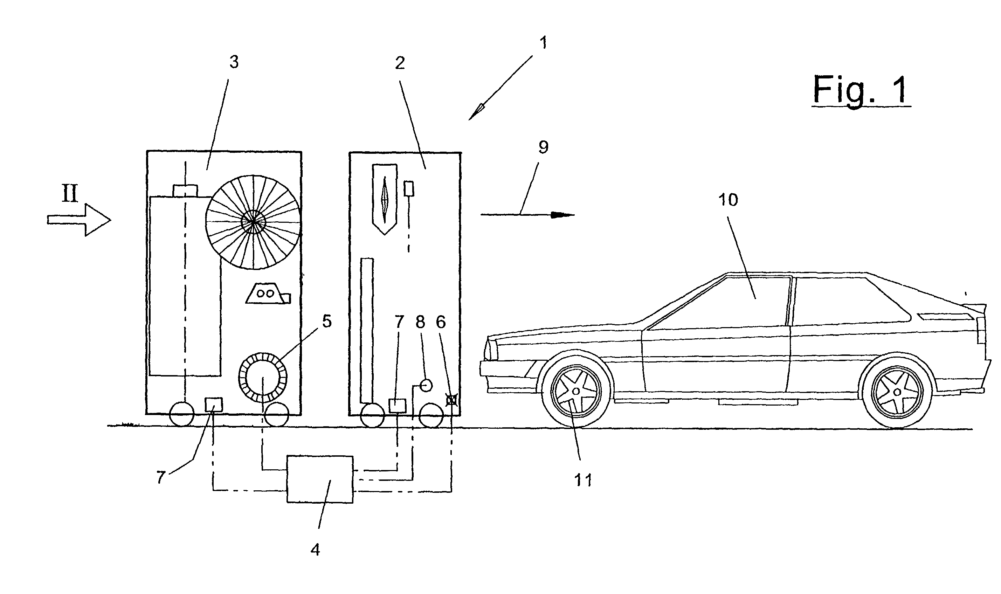

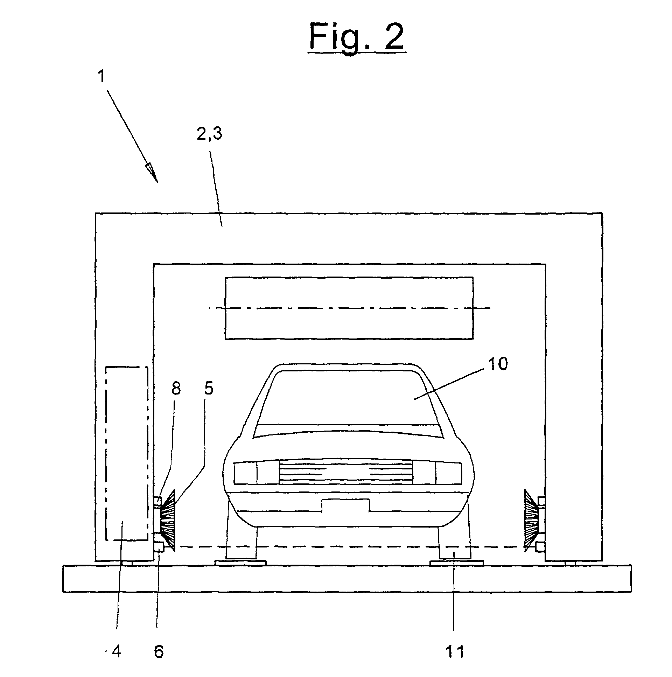

Figur 1 und 2 zeigen in Seiten- und Stirnansicht eine Portalwaschanlage (1) für Fahrzeuge, die als Doppelportalanlage ausgebildet ist. Sie besitzt zwei eigenständig bewegliche Portale (2,3), die mit gleichen oder unterschiedlichen Behandlungsaggregaten ausgerüstet sein können. In der gezeigten Ausführungsform, die die Grundstellung der beiden Portale verdeutlicht, hat das vordere und in Fahrtrichtung (9) vorauseilende Portal (2) eine Trockeneinrichtung mit Dach- und Seitendüsen, eine Schaumauftragevorrichtung, gegebenenfalls ein oder mehrere Seitendüsen für Hochdruckwäsche und eventuell weitere Zusatzaggregate. Das in Grundstellung hintere und nacheilende Portal (3) besitzt eine übliche Wascheinrichtung mit Dach- und Seitenbürsten. Es kann außerdem eine Auftragsvorrichtung für chemische Reinigungsmittel, Spülwasser und dergleichen andere Medien besitzen. Zusätzlich können weitere Aggregate, z.B. auch Trockendüsen, eine Hochdruckwascheinrichtung, insbesondere eine Dachdüse, oder dergleichen angeordnet sein.

Das hintere Portal (3) trägt eine Radwascheinrichtung (5), die z.B. aus zwei an den vertikalen Portalsäulen angeordneten Radwaschbüsten besteht. Die Radwaschbürsten können horizontal beweglich sein und werden zur Wäsche an die Fahrzeugräder (11) vorgefahren und zugestellt. Ansonsten kann die Radwascheinrichtung (5) auch von beliebig anderer Ausbildung sein.

Am anderen Portal (2) ist eine Tasteinrichtung (6) angeordnet, mit der die Radwascheinrichtung (5) und das zweite Portal (3) gesteuert werden. Die Tasteinrichtung (6) ist vorzugsweise an dem in Fahrtrichtung (9) vorderen Rand des Portales (2) angeordnet und befindet sich in Bodennähe. Sie tastet die Fahrzeugräder (11) ab.

Die beiden Portale (2,3) besitzen eine Maschinensteuerung (4). Dies kann eine gemeinsame Maschinensteuerung sein. Alternativ können auch beide Portale (2,3) jeweils eine eigene Maschinensteuerung besitzen, wobei diese Steuerungen miteinander gekoppelt sind. Die Tasteinrichtung (6) ist mit der gemeinsamen Maschinensteuerung (4) bzw. bei der anderen Steuerungsvariante mit der Maschinensteuerung des zweiten Portals (3) verbunden. Vorzugsweise ist die Tasteinrichtung (6) bei einer Steuerungstrennung mit beiden Maschinensteuerungen verbunden. Sie kann dadurch in der bevorzugten Ausführungsform beide Portale (2,3) steuern.

Beide Portale (2,3) besitzen zudem eine Wegerfassungseinrichtung (7). Dies kann z.B. ein Drehgeber an den Portalrädern sein. Es kann ansonsten auch eine beliebig andere Wegerfassungseinrichtung sein.

Das vordere Portal (2) kann zudem eine Radbehandlungseinrichtung (8) besitzen. Diese ist z.B. als rotierender und dabei eine taumelnde Kippbewegung ausführender Sprühkopf ausgebildet, der eine Vorwäsche an den Fahrzeugrädern (11) ausführt. Alternativ oder zusätzlich kann die Radbehandlungseinrichtung (8) auch einen Schaumauftragekopf besitzen, mit dem auf die Radfelgen ein Reinigungsschaum, ein Insektenlöser oder ein sonstiges geeignetes Reinigungsmittel aufgetragen wird. Durch die räumliche Trennung und die Vorpositionierung gegenüber der nachfolgenden Radwascheinrichtung (5) kann hierdurch eine gewisse Einwirkzeit erreicht werden, die dem Schaum oder Reinigungsmittel Gelegenheit zum Lösen der Verschmutzungen am Fahrzeugrad gibt. Mit der nachfolgenden Radwascheinrichtung (5) werden die gelösten Schmutzpartikel dann mechanisch abgewaschen.

Die Radwascheinrichtung (5) und die gegebenenfalls vorhandene Radbehandlungseinrichtung (8) sind ebenfalls mit der Maschinensteuerung (4) verbunden und werden beide über die Signale der Tasteinrichtung (6) in Verbindung mit der Wegerfassungseinrichtung (7) gesteuert.

Die Tasteinrichtung (6) kann in beliebig geeigneter Weise ausgebildet sein. In der bevorzugten Ausführungsform ist sie als Lichtschranke ausgebildet, die z.B. einen Sender an der einen Portalseite und einen Empfänger an der gegenüberliegenden Portalseite aufweist. Sie kann auch aus mehreren Lichtschranken, einer Reflexlichtschranke oder dergleichen bestehen. Die Tasteinrichtung (6) arbeitet vorzugsweise berührungslos. Sie kann dazu auch in anderer Weise ausgebildet sein und z.B. einen Ultraschall-Näherungssensor besitzen. Die Raderfassung ist auch über induktive oder kapazitive Sensoren oder beliebig andere geeignete berührungslos tastende Sensoren möglich. In einer weiteren Variante kann die Tasteinrichtung (6) auch mit Berührung arbeiten und z.B. eine drehbeweglich gelagerte Schaltfahne besitzen, die vom Fahrzeugrad ausgelenkt wird. Die Tasteinrichtung (6) ist derart am Portal (2) angeordnet, daß sie nur auf die Fahrzeugräder (11) anspricht und die anderen Teile der Fahrzeugkarosserie nicht tangiert.

Im Waschbetrieb erfaßt die Tasteinrichtung (6) die vorderen und hinteren Fahrzeugräder (11) und meldet dies z.B. durch Lichtschrankenunterbrechung an die Maschinensteuerung (4). Zugleich werden über die Maschinensteuerung (4) die Positionen beider Portale (2,3) über die Wegerfassungseinrichtungen (7) ermittelt und gegebenenfalls gespeichert. Durch die Maschinensteuerung (4) werden dann zur Radwäsche bzw. Radbehandlung die Portale (2,3) in geeigneter Weise im Bereich der Fahrzeugräder (11) gebremst oder auch stillgesetzt. Die Radbehandlungseinrichtung (8) bzw. die Radwascheinrichtung (5) können dann die Fahrzeugräder (11) in gesteuerter Weise bearbeiten. Nach Beendigung dieser Prozesse wird die Portalfahrt fortgesetzt. Die beiden Portale (2,3) können ansonsten die für die anderen Wasch-, Trocken- und sonstigen Behandlungsprozesse erforderlichen Bewegungen ausführen. Wenn z.B. das auf der gezeigten Grundstellung vorausfahrenden Portal (2) mit den Sprühköpfen (8) die vorderen Fahrzeugräder (11) behandelt, kann das zweite Portal (3) die normale Frontwäsche mit den Waschbürsten und/oder der Hochdruckeinrichtung durchführen. Andererseits kann anschließend das vordere Portal (2) nach Beendigung der Radbehandlung weiterfahren und z.B. einen gegebenenfalls zuvor schon begonnenen Schaumauftrag auf dem Fahrzeug (10) fortsetzen, während das nachfolgende Portal (3) die Radwäsche an den Vorderrädern (11) durchführt.

In einer Abwandlung der gezeigten Ausbildung und Funktion kann am vorderen Portal (2) die Radbehandlungseinrichtung (8) auch entfallen. Das vordere Portal (2) überfährt dann in Vollzug seiner normalen Funktionsprozesse, z.B. Schaumauftrag, das Fahrzeug (10) und tastet dabei lediglich die Fahrzeugräder (11) ab und meldet deren Position zusammen mit der Wegerfassungseinrichtung (7) an die Maschinensteuerung (4). Das Portal (2) unterbricht dazu nicht seinen anderweitig funktionsbestimmten Lauf.

Das nachfolgende Portal (3) führt dann an den Fahrzeugrädern (11) die Radwäsche aus.

Abwandlungen der gezeigten Ausführungsform sind in verschiedener Weise möglich. So kann zum einen die Radwascheinrichtung (5) in beliebig geeigneter Weise ausgebildet sein und anstelle oder zusätzlich zu den gezeigten Radwaschbürsten eine Hochdrucksprüheinrichtung besitzen. Außerdem können Auftragvorrichtungen für Schaum oder andere Reinigungsmittel vorhanden sein. Grundsätzlich ist auch die weitere Bestückung der Portale (2,3) beliebig. Ferner können die Radwascheinrichtung (5) und die Radbehandlungseinrichtung (8) vertauscht werden.

### BEZUGSZEICHENLISTE

- 1: Portalwaschanlage
- 2: Portal, vorauseilend
- 3: Portal, folgend
- 4: Maschinensteuerung
- 5: Radwascheinrichtung, Radwaschbürsten
- 6: Tasteinrichtung, Sensor
- 7: Wegerfassungseinrichtung
- 8: Radbehandlungseinrichtung, Sprühköpfe
- 9: Fahrtrichtung
- 10: Fahrzeug
- 11: Fahrzeugrad

## Patentansprüche

1. Portalwaschanlage für Fahrzeuge, bestehend aus zwei eigenständig beweglichen Portalen (2, 3) mit einer Maschinensteuerung (4), einer Wegerfassungseinrichtung (7) und einer Tasteinrichtung (6) zur Erfassung der Fahrzeugräder (11), wobei zumindest das eine Portal (3) eine Radwascheinrichtung (5) aufweist, **dadurch**
**gekennzeichnet, daß** die Tasteinrichtung (6) zur Erfassung der Fahrzeugräder (11) am anderen Portal (2) angeordnet und mit der Maschinensteuerung (4) für das eine Portal (3) verbunden ist.

2. Portalwaschanlage nach Anspruch 1, **dadurch**
**gekennzeichnet, daß** die Tasteinrichtung (6) zur Positionierung und Steuerung beider Portale (2,3) und der Radwascheinrichtung (5) vorgesehen ist.

3. Portalwaschanlage nach Anspruch 1 oder 2, **dadurch**
**gekennzeichnet, daß** das bei der erstmaligen Radwäsche vorausfahrende Portal (2) die Tasteinrichtung (6) aufweist.

4. Portalwaschanlage nach Anspruch 1, 2 oder 3, **dadurch gekennzeichnet, daß** das mit der Tasteinrichtung (6) ausgerüstete Portal (2) zusätzlich eine Radbehandlungseinrichtung (8) aufweist.

5. Portalwaschanlage nach einem der Ansprüche 1 bis 4, **dadurch gekennzeichnet, daß** die Radwascheinrichtung (5) Bürsten und/oder Waschdüsen aufweist.

6. Portalwaschanlage nach Anspruch 4, **dadurch gekennzeichnet, daß** die Radbehandlungseinrichtung (8) Sprühköpfe für eine Behandlungsflüssigkeit aufweist.

7. Portalwaschanlage nach Anspruch 4, **dadurch gekennzeichnet, daß** die Tasteinrichtung (6) in Fahrtrichtung (9) vor der Radbehandlungseinrichtung (8) angeordnet ist.

8. Portalwaschanlage nach einem der Ansprüche 1 bis 7, **dadurch gekennzeichnet, daß** die Tasteinrichtung (6) als berührungslos arbeitende Sensoreinrichtung, insbesondere als Lichtschranke, ausgebildet ist.

## Claims

1. Portal washing installation for vehicles, consisting of two independently movable portals (2, 3) with a machine controller (4), a travel detection device (7) and a sensing device (6) for detecting the vehicle wheels (11), wherein at least one portal (3) exhibits a wheel washing device (5), **characterised in that** the sensing device (6) for detecting the vehicle wheels (11) is arranged on the other portal (2) and connected to the machine controller (4) for the first portal (3).

2. Portal washing installation according to claim 1, **characterised in that** the sensing device (6) is provided for positioning and controlling both portals (2, 3) and the wheel washing device (5).

3. Portal washing installation according to claim 1 or 2, **characterised in that** the portal (2) leading during the first wheel washing operation exhibits the sensing device (6).

4. Portal washing installation according to claim 1, 2 or 3, **characterised in that** the portal (2) equipped with the sensing device (6) also exhibits a wheel treating device (8).

5. Portal washing installation according to one of claims 1 to 4, **characterised in that** the wheel washing device (5) exhibits brushes and/or washing nozzles.

6. Portal washing installation according to claim 4, **characterised in that** the wheel treating device (8) exhibits spray heads for a treating liquid.

7. Portal washing installation according to claim 4, **characterised in that** the sensing device (6) is arranged in front of the wheel treating device (8) in the direction of travel (9).

8. Portal washing installation according to one of claims 1 to 7, **characterised in that** the sensing device (6) is embodied as a sensor working without contact, in particular as a photo-electric cell.

## Revendications

1. Portique de lavage pour véhicules, se composant de deux portiques (2, 3), mobiles de manière autonome, avec une commande mécanique (4), un dispositif de couverture de trajectoire (7) et un dispositif de palpation (6) pour couvrir les roues du véhicule (11), au moins l'un des portiques (3) présentant un dispositif de lavage de roues (5), **caractérisé en ce que** le dispositif de palpation (6) est agencé pour couvrir les roues (11) du véhicule sur l'autre portique (2) et est relié à la commande mécanique (4) pour l'un des portiques (3).

2. Portique de lavage selon la revendication 1, **caractérisé en ce que** le dispositif de palpation (6) est prévu pour positionner et commander les deux portiques (2, 3) et le dispositif de lavage de roues (5).

3. Portique de lavage selon la revendication 1 ou 2, **caractérisé en ce que** le portique (2), qui part devant lors du lavage de roues initial, présente le dispositif de palpation (6).

4. Portique de lavage selon la revendication 1, 2 ou 3, **caractérisé en ce que** le portique (2), équipé du dispositif de palpation (6), présente de plus un dispositif de traitement de roue (8).

5. Portique de lavage selon l'une des revendications 1 à 4, **caractérisé en ce que** le dispositif de lavage de roues (5) présente des brosses et / ou des buses d'arrosage.

6. Portique de lavage selon la revendication 4, **caractérisé en ce que** le dispositif de traitement de roue (8) présente des têtes de pulvérisation pour un liquide de traitement.

7. Portique de lavage selon la revendication 4, **caractérisé en ce que** le dispositif de palpation (6) est disposé dans le sens de la marche (9), avant le dispositif de traitement de roue (8).

8. Portique de lavage selon l'une des revendications 1 à 7, **caractérisé en ce que** le dispositif de palpation (6) est constitué en tant que dispositif de détection, fonctionnant sans contact, en particulier en tant que barrière lumineuse.
